Europäisches Patentamt

European Patent Office

Office européen des brevets

(11) Publication number: **0 426 399 A2**

# EUROPEAN PATENT APPLICATION

(21) Application number: 90311782.8

(22) Date of filing: 26.10.90

(51) Int. Cl.⁵: **G11B 11/10**

(30) Priority: **02.11.89 US 431004**

(43) Date of publication of application:
**08.05.91 Bulletin 91/19**

(84) Designated Contracting States:
**DE FR GB IT**

(71) Applicant: **Hewlett-Packard Company
Mail Stop 20 B-O, 3000 Hanover Street
Palo Alto, California 94304(US)**

(72) Inventor: **Pyke, Neil
443 Hearthstone Drive
Boise, Idaho 83702(US)**
Inventor: **Marshall, Daniel Ray
112 Curling Drive
Boise, Idaho 83702(US)**

(74) Representative: **Colgan, Stephen James et al
CARPMAELS & RANSFORD 43 Bloomsbury
Square
London WC1A 2RA(GB)**

(54) Segmented bias coil for magneto-optical recording.

(57) A method and apparatus for writing data onto a magneto-optical disk 10 are shown to include optical generators 14,20 for providing a focused beam of light onto the disk 10 at a desired point 34 in order to heat the point 34 and magnetic field generators 36 for generating a bias field 38 of a desired direction at the heated point 34, which includes a plurality of electro-magnets 40, the combination of which provides a generally radially dimensioned bias field 38 with respect to a portion of the disk 10. The magnetic generators 36 are shown to include a base 42 constructed of a magnetic flux conductive material, a plurality of bobbins 44 mounted to the base 42, each bobbin 44 having a central core 46 and a coil 48 wound around the core 46, wherein the coils 48 are independent from one another. The bobbins 44 also include a raised central pole piece 52.

Fig. 3

## SEGMENTED BIAS COIL FOR MAGNETO-OPTICAL RECORDING

### Field of the Invention

The present invention relates to the field of magneto-optical information storage systems and more particularly to the bias coils utilized in such systems for writing data onto magneto-optical media.

### Background of the Invention

A hybrid of the optical and magnetic information storage systems is the so called magneto-optical information storage system. This system provides increased storage capacity due to high areal density and allows data to be erased and rewritten. It has been estimated that the theoretical upper limit of the storage capacity of magneto-optical systems can be at least as high as 300 megabytes per square inch of media. In practical terms this means that on a single 5.25 inch disk, capacities of approximately 400 to 800 megabytes can be expected.

In magneto-optical storage, data are recorded and erased on a thin film of magnetic material having properties to be described herein. Similarly to magnetic recording, magneto optical recording stores information in a sequence of magnetic domains whose magnetic polarity is oriented normal to the media surface in either of two possible orientations. The orientations can be thought of as north-pole-up or north-pole-down. An erased disk has all of its magnetic poles pointing in the same direction. The important feature of magneto-optical media is that the magnetic force required to reverse the polarity of the magnetic domains, i.e. the coercive force, varies greatly with temperature. At room temperature, the coercive force necessary to reverse the polarity is so high that an ordinary magnet is too weak. At approximately 150°C, the coercive force required decreases substantially so that information can be recorded using magnetic fields of reasonable strength.

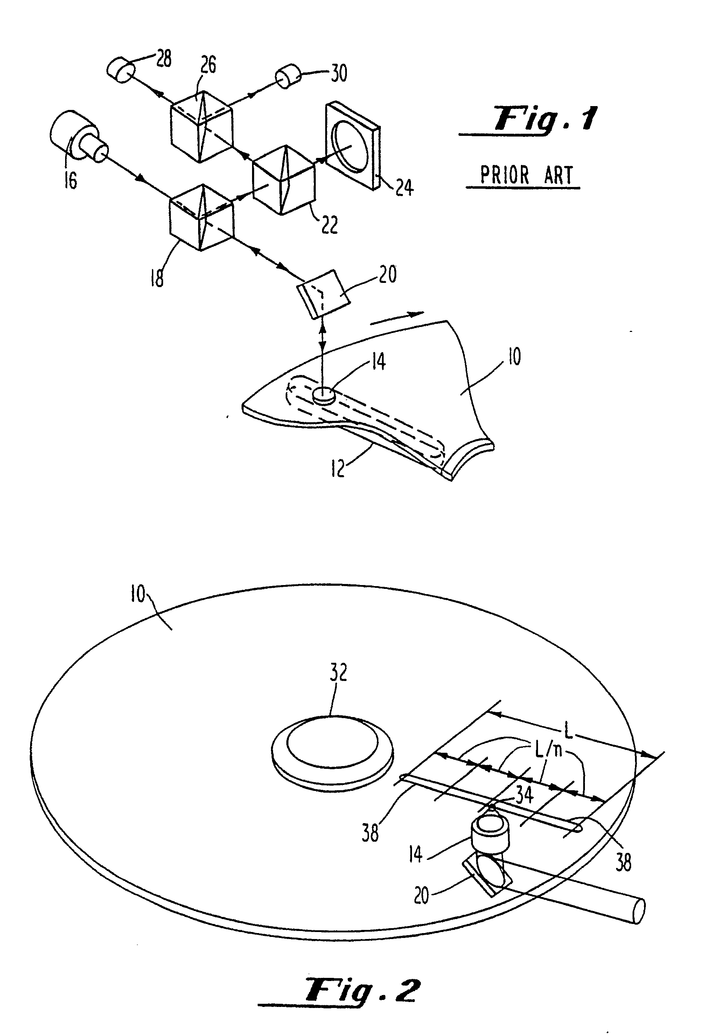

Optical techniques are used in a magneto-optical system to heat selected spots on the media using focused light as the media passes over a single large electromagnet, or bias coil, similar to that shown in Fig. 1. In Fig. 1, a portion of a magneto-optical disk 10 is shown to be rotating between electromagnet 12 and objective lens 14. During a writing operation, light from laser source 16 is passed through polarizing beam splitter 18 and reflected from mirror 20. The light reflected by mirror 20 is focused by lens 14 onto the surface of disk 10. The heat associated with such focused laser light is sufficient to raise the temperature of the media at the focal point to approximately 150°C.

In this way, a point on the media can be heated, lowering the coercive force required to write information at that point. The heated spot within the medium will then take on the polarity of the magnetic flux generated by electromagnet 12. Once the laser beam is turned off, the just heated spot on the media cools, "freezing" the local magnetic orientation of the media due to the increase in the coercive force at that point. To erase information so recorded, the process need only be reversed; that is, the point on the media is heated by passing the laser beam through objective lens 14 so that the magnetic orientation of the media at that point matches the direction of flux generated by the electromagnet. Reading information so recorded on a magneto-optic disk is achieved by electro-optical means. Again referring to Fig. 1, a lower powered light beam from laser source 16 is focused onto the media by objective lens 14. Because of phenomena known as the Kerr magneto-optic effect and the Faraday effect, light reflected from the media (Kerr) or passing through the media (Faraday) will have a slightly different polarization state than that of the incident light focused onto the media. The change in polarization state will be either a clockwise or counterclockwise rotation depending on the magnetic orientation of the media at that point. For a more graphical interpretation of the above described magneto-optic operation, reference is made to Freese, Robert P., "Optical disks become erasable", IEEE Spectrum, February, 1988, pages 41-45. In Fig. 1, light focused onto disk 12 by objective lens 14 is reflected back onto mirror 20 and into polarizing beam splitter 18. Since the reflected light has a different polarization state than the light generated by source 16, a portion is reflected by the mirror element contained in polarizing beam splitter 18 onto the reflective element in beam splitter 22. Some of the beam is then directed onto focus and tracking detector 24 which generates error signals used for positioning objective lens 14. The remainder of the reflected beam is passed through beam splitter 26 which is designed to split the beam into two complementary components which are provided to photodetectors 28 and 30.

Physical contact between the electromagnet and the media in the above described systems is undesirable. As a result, single, relatively large electromagnets, fixed an appreciable distance from the media, have been utilized to generate the necessary magnetic field. As shown in Fig. a single electromagnet 12 generates the magnetic field for the entire width of disk 10. Because such electromagnets have relatively large inductance, they are also relatively slow in changing the direction of the magnetic field upon reversal of current direction.

U.S. Patent Number 4,748,606 - Naito, et al., diskloses the use of a relatively large permanent magnet which is rotated in order to change the direction of the magnetic field. Other electromagnetic devices are described in U.S. Patent Number 4,803,674 - Nakao, et al. The magnetic devices described are designed either for movement with the objective lens or as a single large magnet. A small moveable magnet is undesirable in that it increases the mass which must be moved in order to access particular tracks on the magneto-optical disk. This increase in mass increases the time required to gain access to a given radial location on the disk.

Accordingly, a need exists for a magnetic bias coil which is relatively quick in reversing its magnetic field orientation.

Summary of the Invention

The advantages of the present invention are realized in a method and apparatus for writing data onto a magneto-optical disk and are shown to include optical components for providing a focused beam of light onto the disk at a desired point in order to heat the point and magnetic field components for generating a bias field of a desired direction at the heated point, which includes a plurality of radially aligned electromagnets, each of which provides a generally radially dimensioned bias field oriented normal to the surface of the disk. The preferred embodiment include a base constructed of a magnetic flux conductive material, a plurality of bobbins mounted to the base, each bobbin having a central core and a coil wound around the core, wherein the coils are independent from one another. The bobbins also include a raised central pole piece. Only the coil or coils necessary to generate the bias field at any given point on the disk need be energized. Since the disk is acted upon by a plurality of electromagnets, each individual magnet is considerably smaller than the large single electromagnets previously used. As a result, the power consumption and switching time is much reduced.

Brief Description of the Drawings

The present invention will be better understood, and its numerous objects and advantages will become apparent to those skilled in the art by reference to the following detailed description of the invention when taken in conjunction with the following drawings, in which:

Fig. 1 is a perspective view of a prior art magneto optical information storage system;

Fig. 2 is perspective view of a portion of a magneto optical storage system;

Fig. 3 is a perspective view of a bias coil device constructed in accordance with the terms of the present invention;

Fig. 4 is a section view along the line 4-4 Figure 3;

Fig. 5 is a graph of flux density versus position of two energized and adjacent coils shown in Fig. 3;

Fig. 6 is an alternative embodiment of the bias coil Fig. 3; and

Fig. 7 is a block diagram of a magneto-optical system incorporated in the present invention.

Detailed Description of the Preferred Embodiment

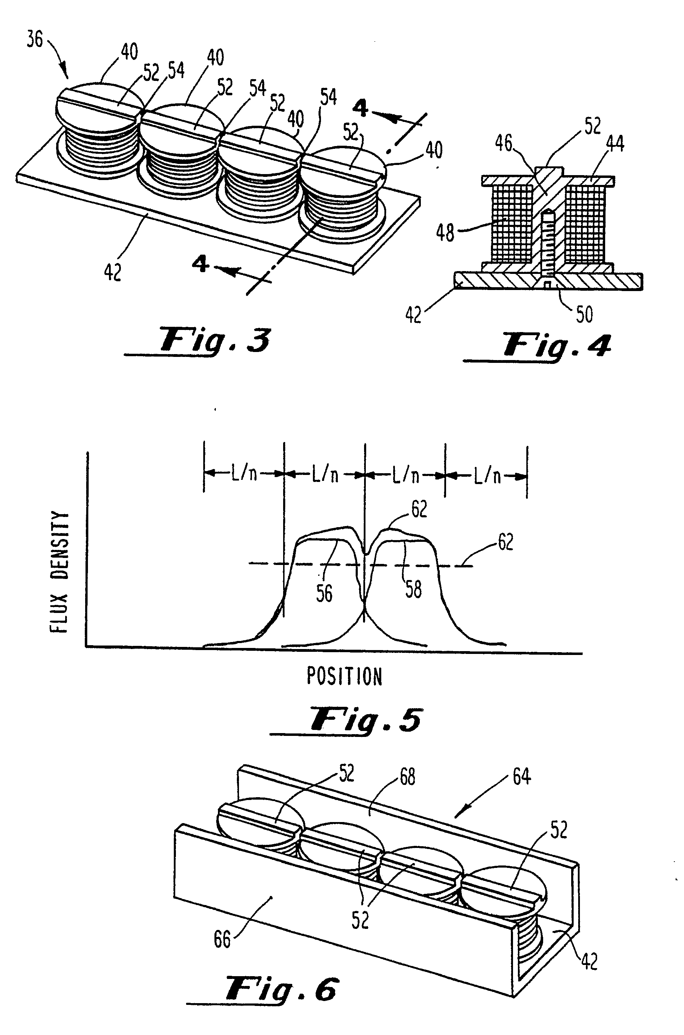

A new and novel magneto-optical information storage system for writing data onto a magneto-optical disk is shown in relation to Figs. 2 and 3. In Fig. 2, a portion of the prior art optical arrangement shown in Fig. 1 is again shown, however, the perspective view is now from beneath disk 10. Additionally, disk 10 is shown to be mounted on hub 32 which is connected in any appropriate fashion to a drive mechanism (not shown) which rotates disk 10. The optical arrangement provides a focused beam of light onto disk 10 at a desired point 34. The light focused on point 34 serves to heat the point and thus reduce the coercive force required to orient the recording media to store or write information.

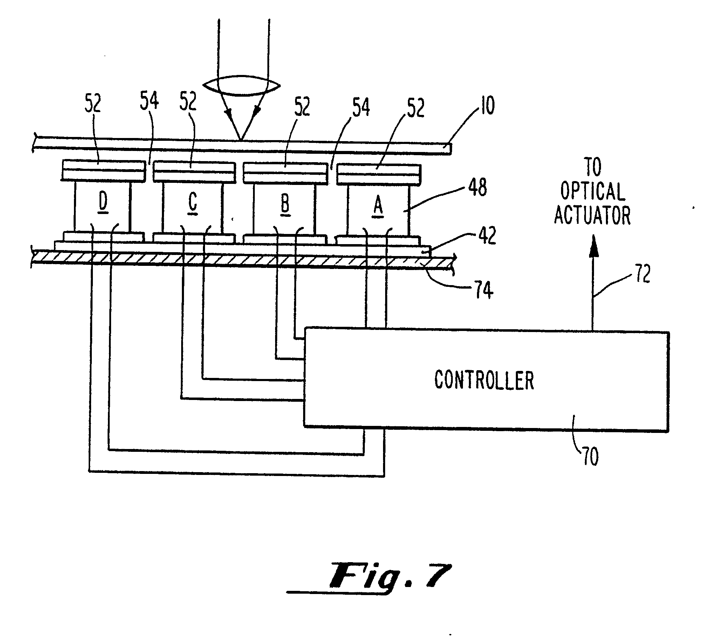

A magnetic field generator or bias coil, generally designated 36 in Fig. 3, is positioned to generate a bias field of a desired direction at point 34 as shown in Fig. 2. The flux associated with such field is generally perpendicular to a plane containing the surface of disk 10. Although not shown in Fig. 2, it will be understood that magnetic field generator 36 is positioned by any suitable means such as attached to a frame so that it provides a generally radially dimension bias field 38. (See Fig. 7) As shown in Fig. 2, bias field 38 has a radial length L and has been divided into n segments. For purposes of illustration n = 4.

As shown in Fig. 3, the magnetic field generator 36 includes a plurality of electromagnets 40. Each electromagnet corresponds to a bias field segment (L/n) shown in Fig. 2. Each electromagnet 40 provides a portion of bias field 38. It will be noted that although not shown, all of the tracks contained on disk 10 are contained within the bias field length L such that as disk 10 rotates, all points on all tracks will pass through field 38.

Although not shown, it will be noted at this point that magnetic field generator 36 shown in Fig. 3 is positioned fixed with respect to the rotational movement of disk 10. In other words, as disk 10 rotates, the data tracks of disk 10 pass through bias field 38.

Fig. 3 shows a series of coils arranged in a straight line as required for a linear positioner or actuator. It is also possible to arrange these coils along an arc as would be required for a rotary positioner.

As shown in Fig. 4, each electromagnet 40 is mounted to a base 42 constructed of a magnetic flux conductive material such as steel. Each electromagnet 40 includes a bobbin 44 having a center core 46. A coil 48 is wound around core 46. Each coil 48 is independent from one another, in that such coils are connected in parallel to a control circuit which is described in relation to Fig. 7. Bobbins 44 are attached to base 42 by any appropriate means such as screw 50.

Bobbins 42 are also shown to have a raised central pole piece 52. It is the orientation and projection of pole piece 52 which enhances the generation of bias field 38 as a generally radially dimensioned field. As shown in Fig. 3, pole pieces 52 are aligned along a radial axis or in a radial direction with respect to disk 10. In the preferred embodiment, pole pieces 52 are generally rectangular or trapozoidal shaped and have a relatively flat uppermost surface generally parallel to the surface of the disk. As used herein, uppermost surface refers to that surface of pole piece 52 which is closest disk 10 during operation.

As shown in Fig. 3, a gap 54 exists between adjacent bobbins 44 and respective pole pieces 52. Such gaps can create a change in the flux density of bias field 38 for points on disk which pass over or correspond to gaps 54.

Referring to Fig. 5, a graph depicting the flux density at various points on disk 10 in field 38 is shown. In Fig. 5, only the two central electromagnets 40 shown in Fig. 3, have been energized. Each electromagnet generates a flux density profile 56 and 58 respectively. A threshold level 60 indicates the level of flux density required in order to orient the recording media of disk 10, when the disk has been appropriately heated. As shown in Fig. 5, the flux density between electromagnets 40, corresponding to gaps 54, falls below threshold level 60. However, when adjacent electromagnets 40 are simultaneously energized, a flux density profile 62 is achieved. It will be noted that the portion of profile 62 which corresponds to a position within gap 54 is above the threshold level 60.

Accordingly, information can be written at points along disk 10 which pass over, or correspond to, gaps 54 if adjacent electromagnets are energized.

In other words, the energizing of adjacent electromagnets 40 generates a bias field on disk 10 corresponding to gap 54 which is of sufficient magnitude or flux density for writing data when the subject point is heated by focused light. It can also be said that gap 54 is sized such that when a current is passed through coils 48 associated with adjacent pole pieces 52, the bias field at a point on disk 10 corresponding to gap 54 is of sufficient magnitude for writing data when the subject point is heated.

An alternative embodiment of magnetic field generator 36 is shown in Fig. 6 and generally designated 64. Magnetic field generator 64 is virtually identical with magnetic field generator 36, except that upstanding sidewalls 66 and 68 are formed as a part of base 42. The upstanding sidewalls are formed from a flux conductive material such as steel. In the preferred embodiment, base 42 and upstanding sidewall 66 and 68 are integrally formed. Thus, sidewalls 66 and 68 form a portion of the magnetic circuit in that flux produced from pole pieces 52 will pass to sidewalls 66 and 68 and therethrough to base 42 and back to bobbin 44.

Referring now to Fig. 7, the magneto-optical information storage system is seen to also include a controller 70. Controller 70 outputs at 72 information which is supplied to an optical actuator (not shown). The optical actuator can be of any known type which serves to position the focused light on a given point or track of disk 10. Information provided at 72 is typically representative of position information on disk 10. Controller 70 utilizes this same information to selectively energize electromagnets 40.

As shown in Fig. 7, electromagnets 40 have been designated A, B, C and D and base 42 has been mounted to frame 74. Consider, for example, that it is desired to focus a beam of light onto point 34 shown in Fig. 2. Controller 70 would send an appropriate signal to an optical actuator which would position mirror 20 and lens 14 in relation to point 34. Since point 34 falls in gap 54 between electromagnets B and C shown in Fig. 7, controller 70 would pass an appropriate current through the coils of both those electromagnets. As a consequence, a bias field would be created in relation to disk 10 having a flux density according to that shown in Fig. 5. Once point 34 is heated, the orientation of the recording media at that point will assume the orientation of the bias field so generated.

It will be noted that in order to generate a bias field of a desired direction, the current generated by controller 70 to any coil 48 must be provided in an appropriate direction. Consequently, the writing or storing of data is dependent upon the direction of the current applied to coils 48.

Thus it is seen that controller 70 provides or controls the positioning of the focus beam of light onto a desired point on disk 10 and also energizes only those electromagnets 40 which are necessary to provide bias field at that point. Since only selected ones of the electromagnets are energized, power usage is minimized. Additionally, since coils 48 are sufficiently smaller than previously used coils, the current rise time is significantly shorter. Accordingly, the orientation of the bias field can be changed faster than was previously possible.

In the preferred embodiment, each coil 48 includes approximately 550 turns of 38 gauge wire and gap 54 is sized to be within the range from .5 to 1 millimeters.

While the invention has been described and illustrated with reference to specific embodiments, those skilled in the art will recognize that modification and variations may be made without departing from the principles of the invention as described herein above and set forth in the following claims.

## Claims

1. A magneto-optical information storage system for writing data onto a magneto-optical disk (10), comprising:
optical means (20,14) for providing a focused beam of light onto said disk (10) at a desired point (34) to heat said point (34); and
magnetic field means (36) for generating a bias field (38) L/n of a desired direction at said point (34), said magnetic field means (36) comprising a plurality of electro-magnets (40), each of which provides a generally radially dimensioned bias field L/n with respect to a portion of said disk (10).

2. The system of claim 1, wherein said magnetic means comprises, a base (42) constructed of a magnetic flux conductive material, a plurality of bobbins (44) mounted to said base (42), said bobbins (44) each having a central core (46) and a coil (48) wound around said core (46), wherein said coils (48) are electrically independent from one another.

3. The system of claim 2, wherein each of said bobbins (44) further comprise a raised central pole piece (52).

4. The system of claim 3, wherein each of said pole pieces (52) is generally rectangular shaped and has a relatively flat upper most surface, said pole pieces (52) being oriented in a substantially radial direction with respect to said disk (lu).

5. The system of claim 3, wherein said raised central pole piece (52) is trapezoidal shaped.

6. The system of claim 3, wherein said raised central pole pieces (52) have surfaces which are parallel to the surface of said disk (10).

7. The system of claim 4, wherein adjacent pole pieces (52) are positioned so that a gap (54) exists therebetween and wherein said gap (54) is sized so that when a current is passed through the coils (48) associated with said adjacent pole pieces (52), the bias field (38) at a region on said disk (10) corresponding to said gap (54) is of sufficient magnitude for writing data when said region is heated.

8. The system of claim 1, wherein a gap (54) exists between said electro-magnets (40) and wherein the energizing of adjacent ones of said electro-magnets (40) generates a bias field (38) at a region on said disk (10) corresponding to said gap (54) of sufficient magnitude for writing data when said point (34) is heated.

9. The system of claim 1, wherein said base (42) comprises a bottom portion to which said electromagnets (40) are attached, and upstanding side walls (66).

10. The system of claim 1, further comprising control means (70) for controlling the positioning of the focused beam of light onto said desired spot (34) and for energizing only those electro-magnets (40) necessary to provide said bias field (38) at said desired point (34).

11. A method for writing data onto a magneto-optical disk (10), comprising the steps of:
providing a focused beam of light onto said disk (10) at a desired point (34) to heat said point (34); and
generating a bias field (38) of a desired magnetic orientation at said point (34) by generating a plurality of bias fields L/n, the array (38) of which is generally radially dimensioned with respect to a portion of said disk (10), said bias fields L/n being fixed with respect to the rotational movement of said disk (10).

12. The method of claim 11, wherein said bias fields L/n are positioned so that portions of each overlap, wherein the resulting bias field (38) at a region on said disk (10) corresponding to the overlapped portions is of sufficient magnitude for writing data when said point (34) is heated.

13. The method of claim 12, further comprising the step of generating only those bias fields L/n necessary to write data at said desired region.

_Fig.1_

PRIOR ART

_Fig.2_

_**Fig. 3**_

_**Fig. 4**_

_**Fig. 5**_

_**Fig. 6**_

_**Fig. 7**_